# EUROPEAN PATENT SPECIFICATION

(11) **EP 1 366 466 B1**
(45) Date of publication and mention of the grant of the patent: **04.12.2019**
(21) Application number: 02703741.5
(22) Date of filing: 06.03.2002
(51) Int. Cl.: G06K 9/00, G06T 7/20

(54) **SPORT ANALYSIS SYSTEM AND METHOD**
SPORTANALYSE- SYSTEM UND VERFAHREN
PROCEDE ET SYSTEME D'ANALYSE POUR LE SPORT

(30) Priority: 06.03.2001 GB 0105421
(43) Date of publication of application: 03.12.2003
(73) Proprietor: Stats Sports Limited, Leeds LS1 4DL (GB)
(72) Inventor: MYLVAGANAM, Ram, Wetherby LS22 4HJ (GB); RAMSAY, Neil, Leeds LS15 4DU (GB); DE GRACA, Frederic, Leeds LS15 9JE (GB)
(74) Representative: Alton, Andrew
(86) International application number: PCT/GB2002/000998
(87) International publication number: WO 2002/071334

(56) References cited:
- US-A- 5 363 297

## Description

The present invention relates to a system and method for obtaining data relating to sporting events, and in particular to a system and method for obtaining player performance and sporting event data from video images of a sporting event.

Detailed and accurate data relating to sporting events can be of use to a number of parties. The audience of a media broadcast of the sporting event enjoy the extra information on the event that can be presented to them during the broadcast. Reports on the sporting event can be augmented by detailed statistics. Accurate statistics can also be used in the betting industry as the subject of wagers at a price or spread betting. Fans of the sport like to have access to statistics and performance data on their favourite team or sports person.

A sports person can also need accurate data on their performance so as to monitor their performance or as a tool in their training or to monitor their fitness. Trainers, physiotherapists, dieticians and medical staff also need accurate and reliable data on a sports persons performance so as to help monitor their progress, recovery, state of health and other indicators of their physical state during a sporting event.

Sports coaches and managers also need detailed data on the performance of an individual or team in order to analyse tactics, weaknesses and other such strategic matters.

One approach to obtaining such data has been to use some form of wireless transmission to determine a sports persons position during a sporting event. However, this requires each player to somehow carry a wireless transmitter, often in a specially adapted piece of sporting kit, such as helmet. However, not all sports have a suitable piece of kit that can be adapted. Further, no sports person wants to carry excess equipment with them and there is a danger that the equipment could be damaged or break down during an event, or cause injury to other persons, especially in contact sports. Furthermore, the use of such ancillary equipment has been prohibited by the ruling bodies of many sports.

Another approach has been to use video images of a sporting event captured by cameras at a stadium. However, in order to obtain quantitatively meaningful data from such systems it is necessary to know the exact position of the cameras relative to the pitch. The positioning of cameras at the sports grounds is therefore limited to only those places at which it is possible to accurately measure the distance of the cameras to a reference point on the pitch. Further, the camera positions must not block the view of spectators, or the view of the pitch be blocked which further limits the possible camera positions. The available camera positions will not be optimal in terms of allowing the most accurate data to be obtained, as a camera should be placed as closely as possible to the playing surface as possible so as to maximise the accuracy data that can be obtained from the images.

US 5,363,297 describes a system for capturing information concerning the movements of players and of the ball in a sporting event. Video cameras are placed to cover the entire playing area of the event. The output of these cameras is provided to a digital image processor, which tracks the movements of the images of the players in the camera images. Multiple camera views of the same playing area are used to help the tracking processor resolve ambiguities arising from overlaps in any one view. For unresolved cases human operators are provided with the camera views and use an interactive interface to identify players as requested by the tracking processor.

"Representation and Retrieval of Video Scene by Using Object Actions and Their Spatio-Temporal Relationships", Masato Kurokawa, et al., Proceedings of the 1999 International Conference on Image Processing, 24 October 1999, IEEE, pages 86-90, XP010369097 describes a content-based video description method intended to improve the searching, indexing and management of video footage. A video sequence can be represented by an action description (which represents the action performed by an object), an interaction description (which describes interactions between multiple objects), and an event structure (which provides a set of spatial and temporal relationship functions and a syntax to define the necessary conditions that a particular interaction should meet). The action description includes an action identifier field, a time interval field (defining the start and stop time of the action), an object identifier field (corresponding to an object number assigned by the system), and a trajectory filed being a time-series of two dimensional co-ordinates of a polyline node for the object. Objects in a video scene, for example of a soccer game, are extracted by region segmentation and then tracked throughout time. The interaction description includes a spatial description field which is used to describe the trajectory of a soccer ball within a given time interval.

Therefore there is a need for a method and system for obtaining accurate player performance data which does not interfere with players and which can be used at any sporting location.

According to a first aspect of the invention, there is provided a method for obtaining data relating to the performance of a plurality of participants in a sporting event held on a playing surface according to claim 1.

By processing a time sequence of calibrated video images, the actual trajectory of a player or officials over the playing surface can be determined from which accurate data reflecting the players performance can be obtained. Further, detailed data relating to the contribution of the participant to the event can be determined and a statistical analysis of the occurrence of sport events and how they correlate with participant positions can also be obtained.

Preferably, the position of the participant is stored for the duration of the participant's participation in the sporting event. The participant's position needs only to be recorded for the amount of time that they are involved in the event.

Preferably, the position of all the participants in the sporting event, or a team, is determined and stored. In this way data relating to the performance of all the players in a team can be recorded.

The calibrated video image can be calibrated by identifying at least three points of the playing surface shown in the video image with the same points on a playing surface of the same size as the actual playing surface. By identifying common points between a scaled version of the playing surface and the video image, the video image can easily be calibrated. Preferably, the points are playing surface markings. The playing surface markings can automatically provide a means for locating fixed points on the playing surface.

Preferably video images from a plurality of different views of the playing surface are used. This helps to provide multiple images from which positional data can be derived, which can help to resolve identification problems and also improve the accuracy of tracking data by allowing a player to be tracked using an optimal image. Preferably, the whole of the playing surface is covered by the different views of the playing surface. In this way all the playing surface is covered ensuring that players can be tracked all over the pitch.

The calibrated video image can be synchronised with reference to an event shown in a reference image.

Preferably the calibrated video images from all the different views are all synchronised. In this way all the positional data is automatically synchronised.

The method can include the step of deriving participant performance data from the position and time data for that participant.

The method can include the step of determining the position of the participant on the playing surface from a calibrated video image showing a different view of the playing surface when the participant is located in an area of overlap of different views of the playing surface. The method step can include automatically swapping to video data from a different view. In this way the most accurate positional data can be derived by automatically using the most appropriate video image.

According to a further aspect of the present invention, there is provided a data processing system for obtaining data relating to the performance of a participant in a sporting event held on a playing surface according to claim 13.

The system can include: a server computer including the storage device, a tracking computer including the display, the means for indicating the location and the data processing means, a high speed network for transmitting frames of digital video data from the server to the tracking computer and a storage device connected to the network for storing data relating to the position of a participant in the sporting event derived by the tracking computer.

The system can include a plurality of tracking computers connected to the network with a tracking computer for each participant in the sporting event. The number of tracking computers can be less than the number of participants in the event.

The system can include an events computer which transmits data relating to the nature and timing of an event in the sporting event over the network to the storage device for storage.

An embodiment of the invention will now be described, by way of example only, and with reference to the accompanying drawings, in which:
Figure 1 shows a schematic illustration of a video data capture system;
Figure 2 shows a schematic illustration of a data processing system, according to an aspect of the invention;
Figure 3 shows a schematic illustration of computer software architecture for implementing a video data processing method according to an aspect of the invention;
Figure 4a shows a schematic illustration of a management computer program;
Figure 4b shows a schematic block diagram of a manager server computer;
Figures 5 to 12, 15 and 16 show screen shots of GUIs illustrating different aspects of the functionalities of the system implemented by software;
Figure 13 shows a schematic block diagram illustrating a manager/tracker detail of the network shown in Figure 2;
Figure 14 illustrates a tracking data data structure;
Figure 15 shows a schematic block diagram illustrating an events engine part of the system;
Figure 16 shows a screen shot of a GUI illustrating a quality control aspect of the functionality of the system implemented by software; and
Figure 17 illustrates an event data data structure.

The same items in different figures share common reference numerals unless indicated otherwise. The following discussion focusses on the application of the invention to football or soccer, but its application is not considered to be limited to football, but extends to cover other sports, including water based sports, in which case the "playing surface' can be considered to be the area of water used by participants and over which the event takes place.

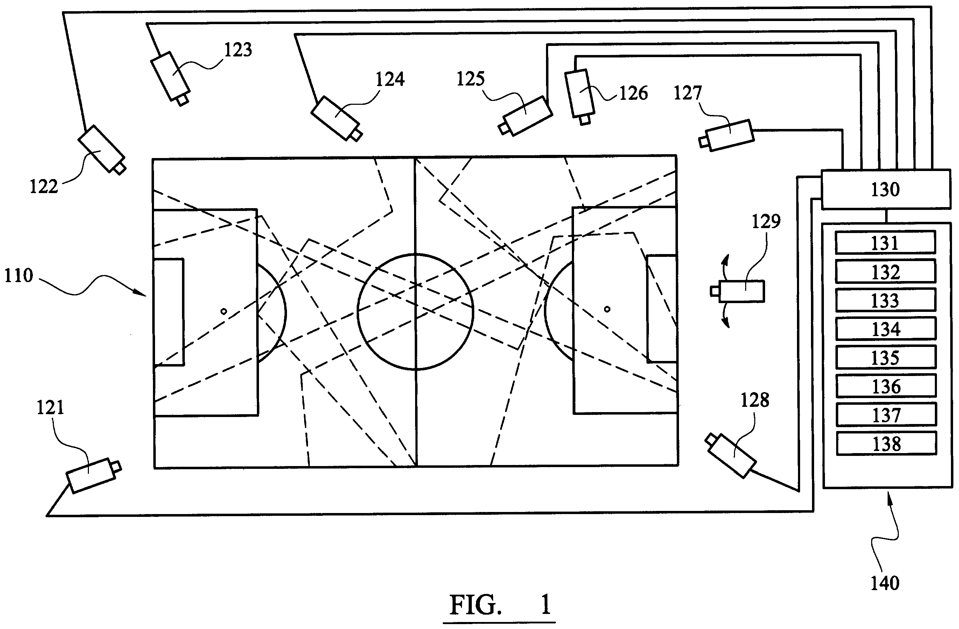

Figure 1 shows a football or soccer pitch 110 having a playing surface 115 over which the players of both teams and the match officials move as they participate in the game of football. The game of football is a sporting event and the players and match officials are participants. The playing surface is substantially the pitch itself but also includes the areas to the sides of the pitch and at the ends where the officials and players will sometimes need to be during the game, eg for throw ins and corners.

Eight CCTV cameras 121-128 are located around the pitch and raised above the level of the pitch. The cameras have a fairly narrow field of view 9°-12°. Each camera has a different perspective view of the pitch and covers a different region of the playing surface 115. The different regions overlap such that the entirety of the playing surface is covered. The cameras are positioned to ensure that the whole of the pitch is covered and also to ensure that as much of the region in their field of view is as close to the camera as possible, which helps to improve the accuracy of the data derived form the images as will be described later. A conventional television camera 129 continuously follows the action, ie the football itself in the case of football, and this unedited TV feed is recorded.

The analogue video data from each camera is fed to an analogue to digital converter 130 and frames of digital video data are captured and stored at a rate of ten frames a second. The capture rate can be greater or less, but 10 frames a second has been found to provide a good balance between the data processing demands and accuracy of match data. The digital video image data from each camera is stored in a respective removable hard disk 131-138 provided in a data storage device 140. At half time, the removable hard disk are removed and replaced by further removable hard disks to store digital video image date for the second half.

Instead of using conventional CCTV cameras, digital cameras can be used, in which case the analogue to digital converter 130 is not required and the captured digital video image data can be stored directly on the removable hard disks.

At the end of the game the captured and stored digital video image data from each camera and for both halves, together with the recorded unedited TV feed is transferred to a data processing system.

As an alternative to the above method of data capture, a real time data capture and transmission method can be used. A high speed data transmission line capable of data transfer rates of 20 megabytes per second is used to transmit the digital video image data from the location of the sports ground to a central hub and then from that hub to a remote data processing location. TV pictures can also be transmitted over the network for use in the data processing or for broadcast by a broadcaster.

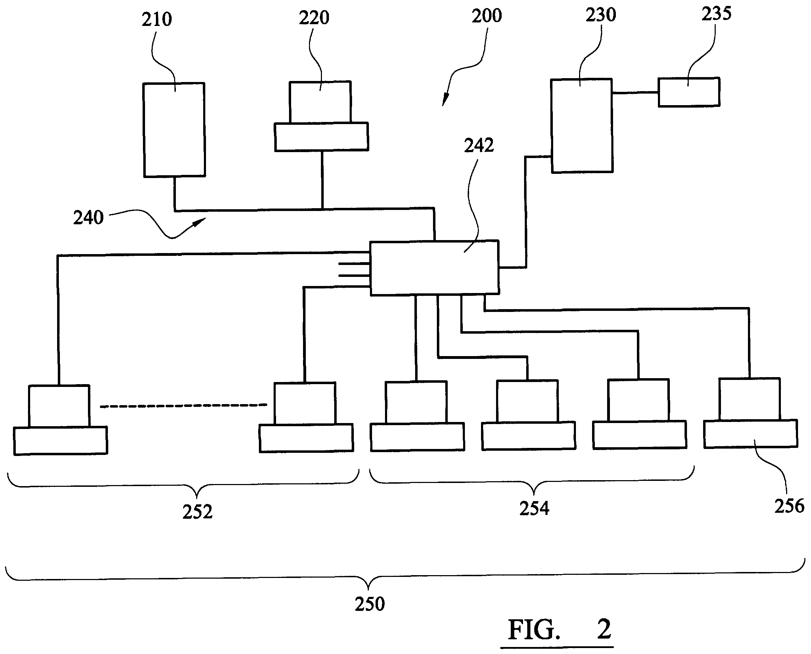

Figure 2 shows a schematic block diagram of a computer system 200 for processing the captured digital video image data. A system as shown in Figure 2 is used for each half of the match. The system is a client-server based network. A number of video data storage servers 210 (shown as a single device) store the captured digital video image data. Either the removable hard disks are inserted into the servers, or if the data has been transmitted over the high speed data line, then they are provided with their own hard disks onto which the video data is saved.

A managing server 220 is provided on which software managing the video data processing and controlling the network operation is run. A storage server 230 is provided as a back up device to store a back up copy of processed data and is connected to a tape drive 235 for making permanent copies of processed data. The network needs to be high speed in order to cope with the high rates of data traffic involved in processing video images. An optical fibre based limb 240 of the network connects the storage servers 210 and managing server 220 to a fibre optic hub 242 and provides gigabit per second data transfer rates.

A number of client computers 250 are connected to the hub by optical fibre limbs of the network. A tracking computer 252 is provided for each of the players normally participating in a game (twenty two) in order to track the position on the pitch of each player individually. A tracking computer 254 is also provided for each of the match officials, which in the case of football is normally three (a referee and two assistant referees) in order to track their positions on the pitch individually. An events computer 256 is also provided to identify events in the match, such as goals, touches of the ball, throw ins, headers, free kicks, etc.

The managing server 220 is operated by a match manager to set up and control the processing of video image data for a match and collate the processed data under control of software. Video image data is transferred a frame at a time over the network from the storage servers 210 to the tracking computers and events computer. Control data and signals from the manager server are also transferred over the network to the tracking and events computers.

The tracking computers and events computers are operated by operatives under the control of software to derive data relating to the sequential position of the players and officials and data indicating the occurrence of match events from the image data. Processed tracking and events data are stored locally on the tracking and events computers and also transmitted over the network to the manager server 220 and also to the storage server 230 as a data backup. The processed position and event data can then be analysed, placed in a database, or used to generate a display.

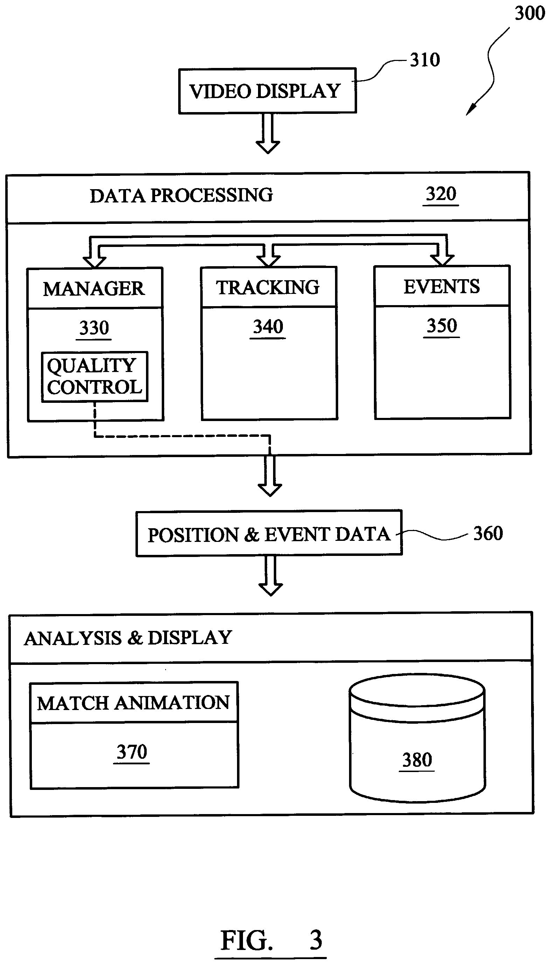

Figure 3 illustrates the overall architecture 300 of a data processing method that is implemented by software. The captured video data 310 is processed over the network 200 by software 320 comprising manager 330, tracking 340 and events 350 programs to generate processed sequential player position and event data 360 which can then be used by a match program 370 to provide an animation of the match, together with corresponding TV footage, or placed in a database 380. The data can then be analysed using data mining techniques to provide indications of the players performance or of the teams performance. Access to parts or the whole of the database can be provided over the internet and parts or the whole of the data accessed and used by other parties, including football clubs, academics, journalists, sports organisations, fans or betting organisations.

The video data processing software 320 will now be described in more detail. Although it is preferable to process the video data over a network to enable parallel processing of the tracking data, the software can be operated on a single computer if necessary or where appropriate, eg in a sporting event having only a single participant. The manager program 330 runs on the manager server 220, the tracking program runs on the tracking computers 252, 254 and the events program 350 runs on the events computer 256.

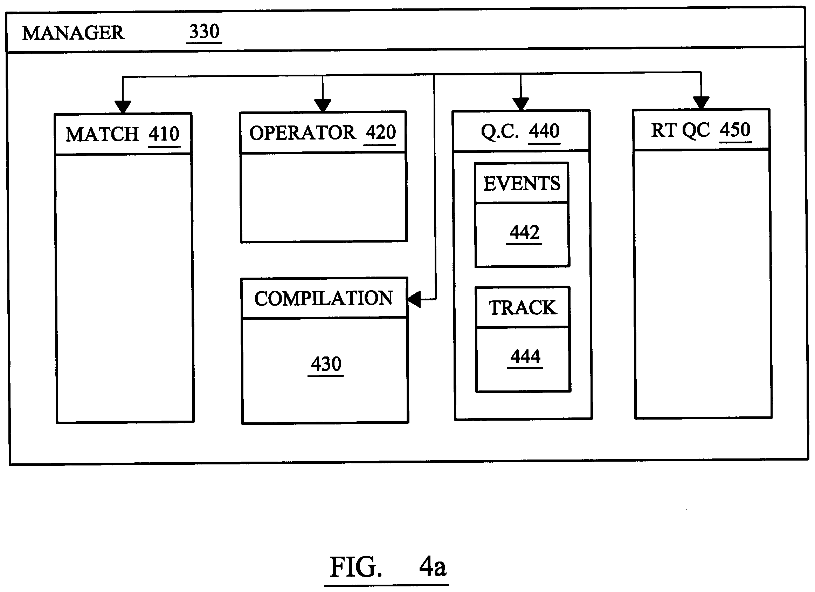

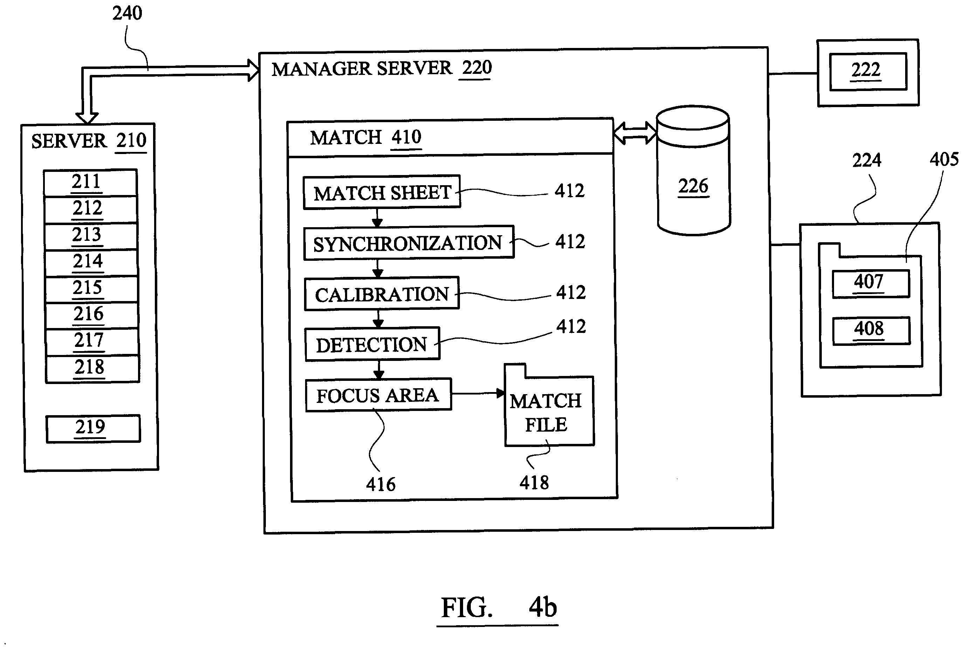

With reference to Figures 4a and 4b, the manager program 330 is a single program operating on a single platform as a part of a client-server based network architecture. The manager program 330 comprises a number of software modules providing match set-up 410, operator allocation 420, data compilation 430, processed data quality control 440 and real time quality control monitoring 450 functionalities.

The match set-up program 410 is used for each match in order to prepare a match file 418 which is required and used by the tracking and events programs in order to allow position and event data to be derived. The match set-up program includes modules for setting up a match sheet 412, for synchronizing the captured video data 413, for calibrating displayed images 414, for determining detection parameters 415, and for identifying preferred image areas to be used for tracking 416. Data entered into these modules and derived from these modules is stored in a match file 418.

The digital video image data from each of the cameras is stored on the storage server 210 in respective individual "movie' files 211-218. The stored digital video image data stored in the movie files corresponds to the video images captured as individual video frames at the rate of 10 frames per second. The storage server also stores digital video image data corresponding to the unedited TV feed captured by camera 129 as a 'TV movie' file 219 which was also captured at the rate of 10 frames per second. The camera image data in the movie files 211-218 and TV image data in the TV movie file 219 are accessible by the manager server 220 over the high speed network connection 240.

As a first step in the data processing method 320, the presence of the movie files and TV file on the storage server are checked by using a video player program to display the images on the monitor 222 of the manager computer 220 view the contents. The data in the files is compressed and stored in an MJPEG file format with an '.avi' extender, indicating it to be a video file, and is decompressed before being played by the video player program. The MPEG2 video file format is also suitable. A match folder 405 is then created and named with both team names, the match date and the half number, ie first or second, and stored in a storage device 224 of the manager server. A video folder 407 is then created within the match folder 405 and shortcuts to the video data files 211-218 and TV data file 219 created and the short cuts renamed as "Camera 0n.avi' (n=1 to 8) and 'TV.avi' respectively. A trajectory folder 408 to store player and official tracking data is also created within the match folder and named 'traj'.

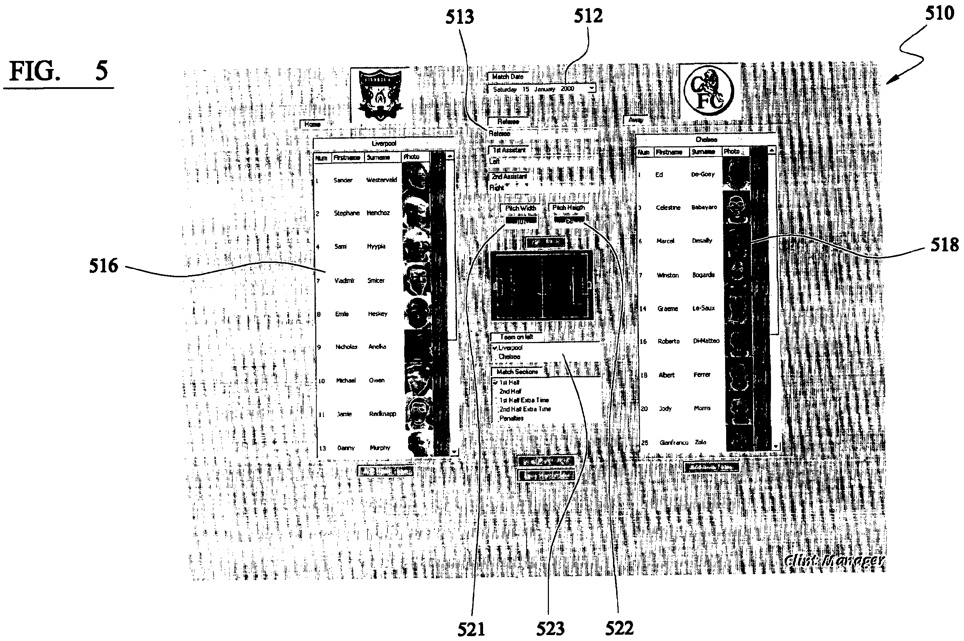

Once the match folder has been created, the manager program 410 itself is launched to create the match file 418. Firstly an information screen is displayed to the user which displays information on the progress of the preparation of the match file 418. The user then selects and displays a "match sheet' in the form of a graphical user interface (GUI) providing a template with fields for the user to enter match data which is processed by the match sheet module 412. A screen shot of a complete match sheet 510 is shown in Figure 5.

The match sheet includes fields for entering match date data 512 which is selected and entered from a drop down automatic calender. Fields 513, 514 and 515 are provided for entering the referee, and two referee's assistants names. (A field for the reserve official can also be provided.) Home team 516 and away team data 518 fields are also provided. The manager server is provided with a database 226 storing club details such as the team badge and details of the clubs' players including digitised photographs of the players. The home team is selected from a drop down menu of alphabetised team names. When a team is selected the club's badge is displayed and the club's players details are displayed. The user then indicates which of the players actually participated in the game to select the starting eleven. Any substitutes used in the game are also indicated.

Once the players and substitutes have been selected, the home team kit details are entered, by scrolling through and selecting from a number of standard shirt designs 519 and indicating the shirt and numbering colours from drop down menus 520. Once the home team data entry has been completed it is stored by the match sheet module and the user can select the away team and enter away team data in the same manner.

Pitch size data indicating the length 521 and width 522 of the pitch is then entered. The pitch length and width have previously been measured by triangulation at the stadium in order to provide accurate pitch size data. Teams are allowed to change their pitch size for different matches and it is vital that accurate pitch size data is available to the system in order to allow the players positions to be correctly calculated as will be described be-low. An indication of which way the teams are playing, ie at which end, is also entered 523. The match sheet is then complete and the match sheet data is then saved.

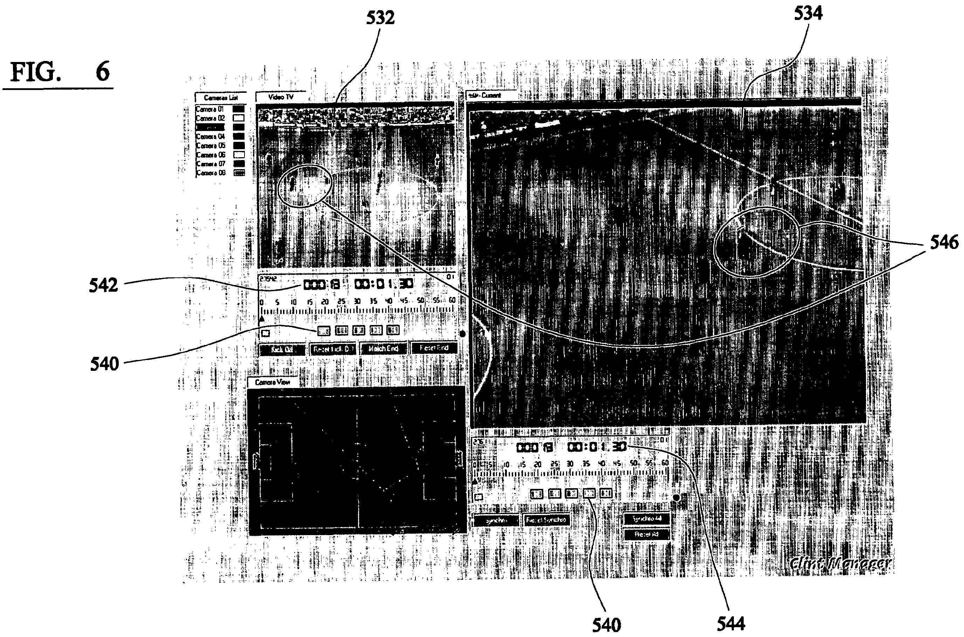

The camera data is then synchronized by using the synchronization module 413. The synchronization module 413 includes video player software to display images derived from the data in the camera and TV files which are accessed via the camera and TV shortcuts in the video folder 407. Figure 6 shows a screen shot of the GUI 530 provided by the synchronization module. A player for the TV data displays frames of the unedited TV feed 532, and a player for the camera data displays frames of the camera images 534 showing different perspective views of the pitch and players. The player software includes player control buttons 540 and a frame counter 542, 544 which, knowing the frame capture rate, also provides a time index.

Firstly, the TV video needs to have start of half and end of half markers added. The TV video is played and the first frame in which the ball moves is found. That frame is then identified as the start time tₛₜₐᵣₜ for that half of the game; ie that frame number nₛₜₐᵣₜ corresponds to match time t=0. The timer display 542 is then reset to 00000 for that frame. The video is then fast forwarded to the end and the last frame in which that half ends is determined and that frame, with frame number n_{end'} is identified and a half end time t_{end} can be determined as one frame corresponds to 0.1 of a second.

Once the TV video has been indexed with the half start and end, the camera video from each of the cameras needs to be synchronized with each other and with the TV video providing the common reference time.

A frame showing an event is selected from the TV video, such as the kick off, and the camera video for the first of the eight cameras is played to identify the camera frame showing that same event. Once the frame for the same event has been found in the camera video, the user indicates this to the synchronization module which then indexes the camera data to indicate that frame number n¹ corresponds to tₛₜₐᵣₜ. For instance, if the TV video started recording before the camera, then the same event will have a higher frame number for the TV video than the camera video and vice versa.

The video data from all eight cameras needs to be synchronized with respect to the TV camera video. However, not all of the cameras will see the kick off, but as the TV video follows the ball over the pitch it will be possible to identify an event occurring in the area of the pitch covered by a respective camera which is also shown in the TV video, eg the circled player 546 passing the ball as shown in the TV image and camera image. Hence the camera video from all of the eight cameras is synchronized with respect to the TV camera timing. In practice this is achieved by saving a data item indicating the offset of the match start frame number nₛₜₐᵣₜ from the first recorded frame n₁ for each of the cameras and TV camera. Once all eight cameras have been synchronized, the synchronization data is saved.

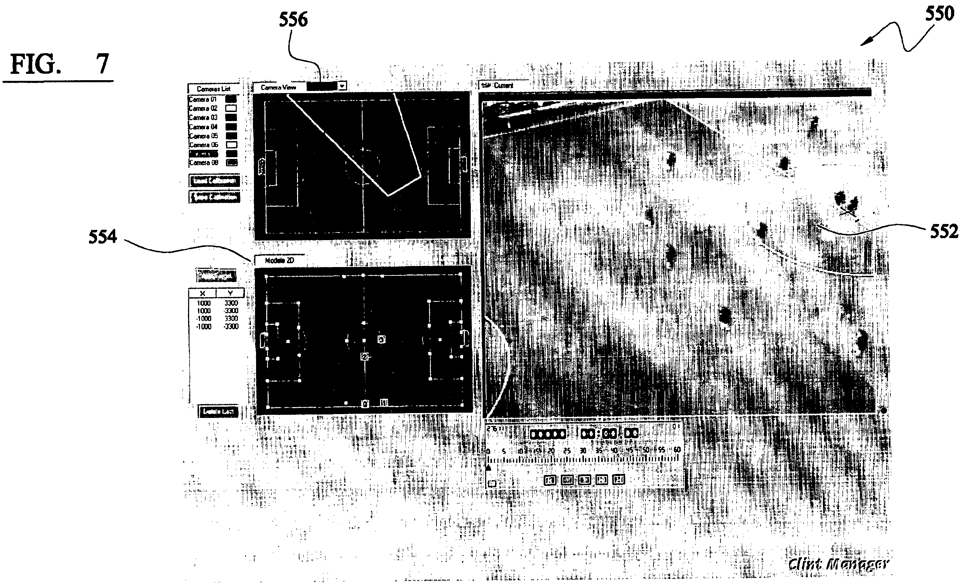

The calibration module 414 is then used to calibrate the images that are used during tracking to identify the players position on the pitch. Figure 7 shows a screen shot of the GUI 550 used by the calibration module. The calibration module includes a video player which is used to display an image 552 showing a camera's perspective view by processing the camera video data. The GUI also displays a two-dimensional (2D) plan model 554 of the pitch. The actual size of the pitch has already been entered in the match sheet section and so the manager program knows the appropriate scale for the model 554. The GUI also displays a 2D representation of the pitch 556 on which the area of the pitch within the cameras field of view can be displayed.

The image 552 needs to be calibrated which is achieved by mapping the 2D model of the pitch onto the perspective view of the pitch. The mapping is a simple geometric operation based on rotations and translations. The mapping from a plan view to a perspective view is accomplished by a matrix based transformation. The mapping routine used during calibration is based on homogenous co-ordinates and embeds thre-dimensional co-ordinates and transformations into a four-dimensional matrix format. Inversions or combinations of linear transformations are simplified to inversion or multiplication of the corresponding matrices. The use of homogenous co-ordinates also allows perspective transformations to be carried out. These matrix based operations allow the indication of a position on a 2D picture to be transformed and rotated so that it is replicated in a false 3D environment (and vice versa). Therefore, tracking of player positions from the 3D perspective views can be replicated onto a 2D representation of the pitch and vice versa.

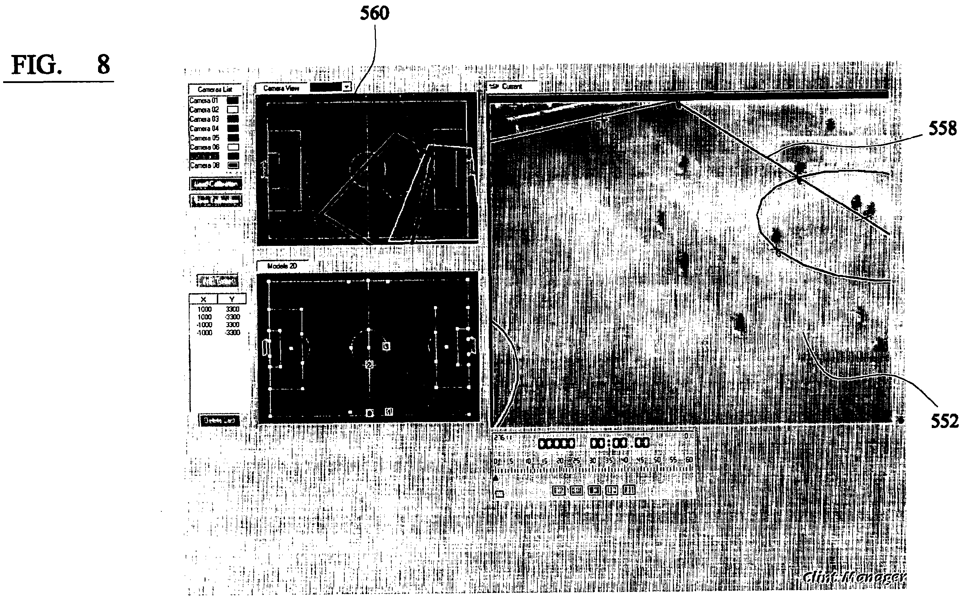

Four points on the pitch in the displayed image are identified, with at most two co-linear points. At least three points are required for translations and rotations, but more points improves the accuracy of the calibration procedure. In Figure 8, the points selected are the intercept of the half way line and by line, the centre spot, the point on the centre circle on the longitudinal axis of the pitch, and the corner of the penalty area. The same four points are then identified on the pitch model 554 as corresponding to the image points. In Figure 8, the four points are based on pitch markings, which are fixed, and therefore their positions on the pitch can be derived from the pitch width and length data. The matrix based transformation is carried out to 'overlay' the model pitch 554 onto the displayed pitch image. The image of the pitch has thus been calibrated by having the model pitch of known size mapped onto the displayed image.

The model pitch markings 558 are then overlaid on the video image 552 to provide a visual indication of the calibration. The program also generates, from the model pitch and the and knowing the size of the video player screen, an outline indication 560 of the area on the pitch covered by the field of view of the camera. The outline is given a different colour for each camera view to aid recognition. When the field of view of the first camera has been calibrated, calibration data for that camera is saved. The calibration procedure is then repeated for the rest of the eight cameras and their respective calibration data saved. As each camera is calibrated its field of view outline is indicated on the camera field of view pitch 556. When all the camera views have been calibrated, then the saved calibration data can be used again for the same stadium, provided the cameras are kept in the same positions and so all games in that stadium can use the same calibration data.

In the event that the pitch length and width are changed then this data only needs re-entering in the match sheet module and the appropriate scale factor can automatically be used. This assumes that the pitch has been laid out according to the regulations sizes. In practice, a groundsman, when changing the size of the pitch, sometimes does not use the exact dimensions required by the regulations and so some features, such as the size of the penalty box in soccer may be at variance with the correct dimensions. Hence in practice, if the pitch size has been changed, it is best practice to check the pitch calibration, and measure and re-calibrate the pitch as required.

If sufficient pitch marking points are not available for a view, or in order to improve the accuracy of the calibration, a target point can be added to the 2D pitch model 554. The position of the target point on the actual pitch must have been measured previously and then the cartesian co-ordinates of the point are entered and the target point is displayed on the pitch model 554. That point on the displayed pitch image 552 can then be used in the step of identifying corresponding points on the image of the pitch and the model pitch for the calibration mapping.

The accuracy of the calibrated images can also be checked using a test point routine. A cross cursor is moved over the displayed pitch image 552 and the point on the camera view pitch 556 which maps from the image 552 is displayed. Thus is the cross is placed on the half way line in the image, then an indication should appear on the half way line on the camera view pitch if the calibration is accurate. If it does not fall on the correct position, then the camera view needs re-calibrating and the target point routine can be used if the pitch marking points are un-suitable. Both horizontal and vertical features of the pitch are checked to ensure that the mapping between the image of the pitch and the computer representation of the pitch is accurate.

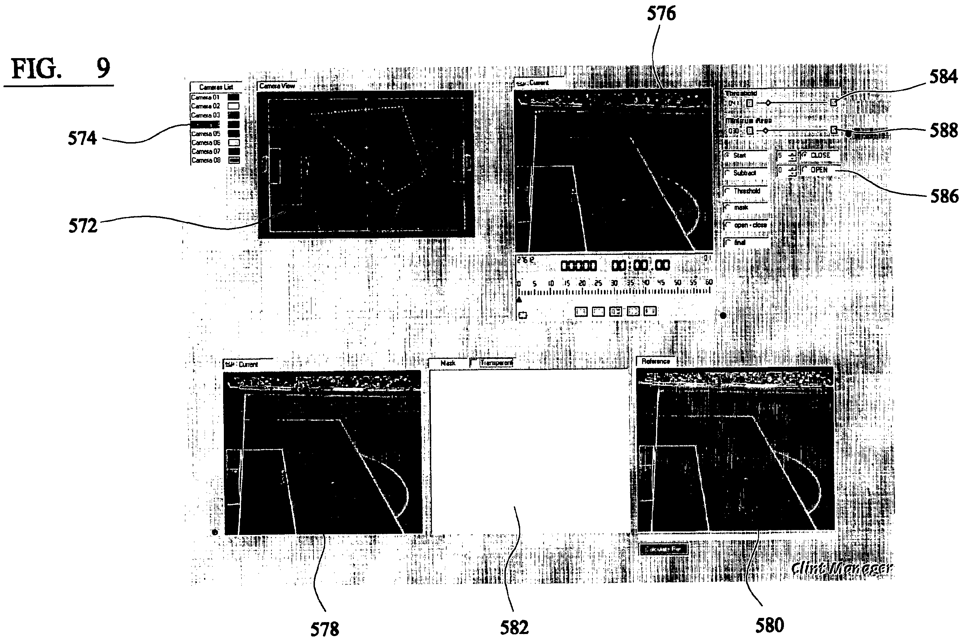

The detection module 415 is then used to configure detection for the automatic tracking routine which can be used by the tracking program 340. A screen shot of the detection module GUI 570 is shown in Figure 9. The GUI includes the camera field of view pitch display 572 similar to that provided in the calibration module and a list 574 of the cameras from which the camera video to be viewed can be selected. A video player 576 is also provided to display the camera video. A display 578 of the current camera video image, a display 580 for a reference image and a display 582 for a mask are also provided.

The first camera is selected so as to determine how the automatic detection routine should be configured for the video image data from that camera. Firstly, a reference image of the pitch without players is generated. This can be captured before the match starts or can be an average over a number of frames in which the players will all have been moving and so the only constant image data will be the pitch. A single reference image can be used throughout auto-tracking. Alternatively, if the weather conditions change significantly during a game, eg from bright sunshine to cloudy or if the shadow of the stadium moves over the pitch during the game, then different reference images can be used at different match times by the auto-tracking routine.

A mask is then created to mask out parts of the video image that are not needed for tracking, such as crowd areas. Parts of the byline will be required in order to track the assistant referees. The perimeter of the mask is determined by indicating the corners of the mask on the current view 578 and a representation of the mask is shown in the mask display 582. The effect of the mask on the current view can be shown in the mask display by selecting a 'transparent' option such that the area of the video image inside the mask perimeter are shown. The detection configuration can then begin.

The reference image is subtracted from the video image displayed by the player 576. This generates an image in which the pixels corresponding to the players and officials contrast to the background pixels which have no or little brightness. A threshold parameter can be adjusted by moving a virtual slider 584. Those pixels with a brightness below the threshold value are extinguished and those above the threshold are given a maximum value thereby allowing players to be identified as being blocks of non-extinguished pixels. If the threshold is set too low then pitch features may be retained and if the threshold is set too high then players may be removed.

The mask is then applied to the video image displayed in the player to remove the crowd from the image.

A player is identified as being a continuous block of lit pixels. However, by adjusting the threshold in order to remove any background features often pixels corresponding to a part of a player are also extinguished. Therefore a morphology procedure, or fill in routine, is used in which 'missing' player pixels are added by adding a perimeter of on pixels around any pixel that is on. Extra on pixels are added or deleted by operating displayed buttons 586. This is repeated until all the players displayed are defined by a continuous block of on pixels.

A pixel identification box is then determined for each block of pixels by rasterizing the image to identify the blocks of on pixels. The middle of the bottom line of the box around a player block of pixels is used to define as the position of the player on the pitch. If a player is far away in an image then the block of pixels that represents them will be small. It is possible to ignore distant players, as the tracking will be inaccurate, by defining a minimum pixel box height. Alternatively, if that player is to be tracked from that image, then the pixel box height may need to be decreased to ensure that the block of pixels is identified as corresponding to a player. A virtual slider 588 is provided by which the pixel box height can be altered. The auto-tracking configuration is carried out for each camera view and the auto-tracking configuration data is stored.

The focus area module 416 is used to determine which parts of the video image from each camera should be used for tracking players over the pitch. The closer a player is to the camera, the greater the number of pixels they will occupy and therefore the greater the accuracy with which their position can be determined. The fields of view of the cameras overlap and so a player will be shown in the field of view of a number of different cameras. That camera closest to the player provides the images from which the players position can most accurately be determined. During tracking of a player by the tracking program, the camera image being used can then automatically be changed as the player moves over the pitch. A manual camera view select over-ride is provided in the tracking program.

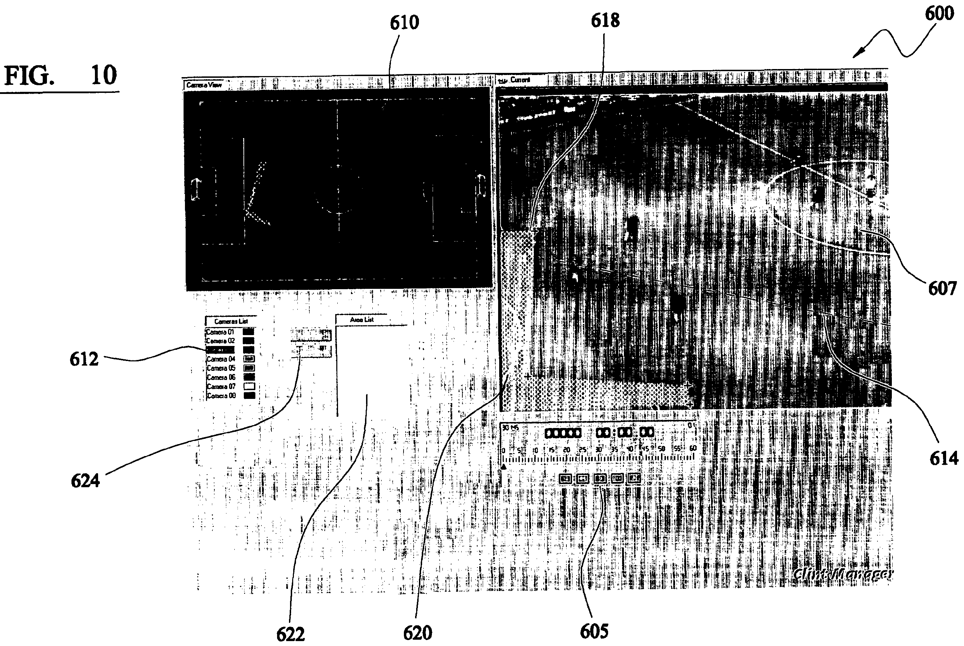

A screen shot of the focus area module GUI 600 is shown in Figure 10. The focus area module includes a video player 605 for displaying the camera video images 607. A camera view pitch 610 is also displayed to show the areas on the pitch covered by the different fields of view of the cameras and a list of the cameras 612 is also provided by which the video images to be displayed in the viewer can be selected.

The selected camera view image 607 includes overlayed colour coded lines 614 indicating the other camera views that also cover that area of the pitch. The image has a fixed pixel density and the same number of pixels represent greater distances the further away from the camera you go and therefore distant parts of the image are less accurately represented in the image. Therefore players in the upper part of the image should be tracked using a camera closer to them if available. The players near the centre spot and beyond can more accurately be tracked by the camera with the field of view indicated by the perimeter line 616.

The best camera to use can be investigated using the test point routine as described above, to indicate a position in the displayed image 607, which is then mapped onto the camera view pitch display 610 so that those camera views including that position can easily be identified. The user then can then select and display the image from other cameras to see if they are suitable for tracking players over that part of the pitch.

If it is decided that a different camera image should be used for a part of the pitch shown in a first camera image, then it is necessary to define the area for which the camera image needs to change. The corners of the region for which the camera needs to change are identified on the displayed camera image 607 by crosses 618 which define the perimeter of a change over area 620. An area list field 622 is provided and an indication that a change over area is to be added is made with a displayed button 624. A list of' cameras is then displayed and the camera to switch to when tracking enters the change over area is indicated and a link to that camera is created and stored.

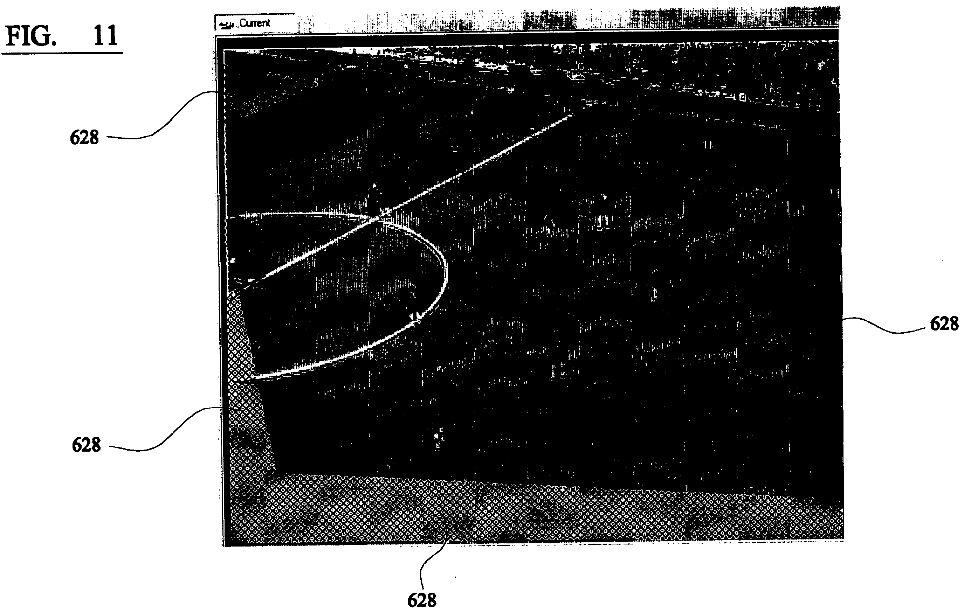

This process is repeated for all areas in the displayed image 607 for which there are alternative camera views until a tracking area 626 and change over areas 628 for that camera have been defined, as illustrated in Figure 11. This is repeated for each camera so that the change over areas and tracking areas for each camera have been defined. The change over area data is then saved and this completes the match file 418. A match file is generated for each half of the game. A computer network 200 as illustrated in Figure 2 is used to process the data for each half in parallel so as to reduce the time taken to process the data for the entire game.

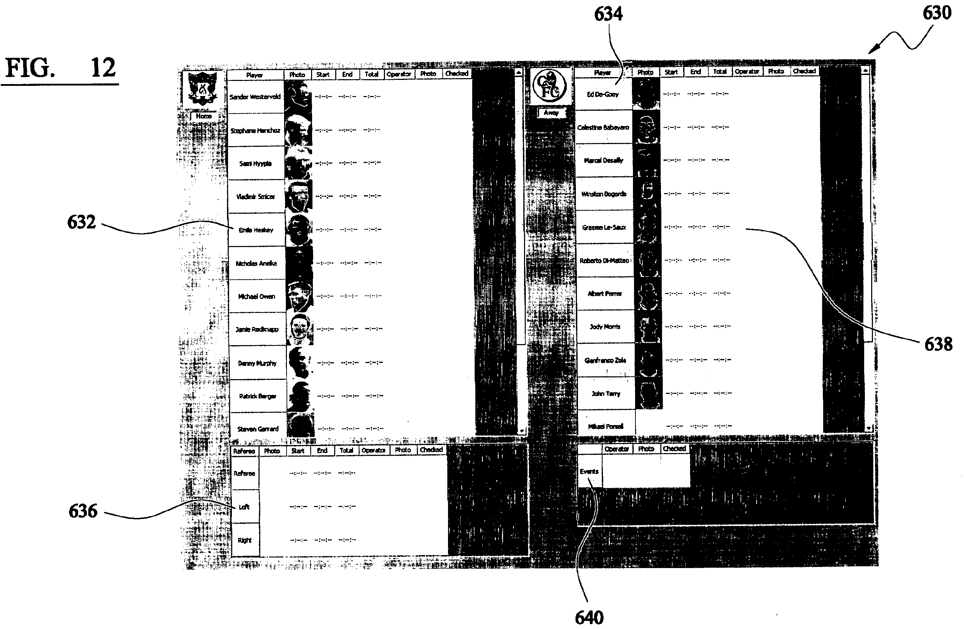

The functions of the operator program 420 will now be described. The operator program is used to assign the task of tacking the different players and officials to the tracking computer 252, 254 operators. The GUI 630 for the operator program is shown in Figure 12. The operator program uses the player and match official data derived from the match sheet module 412 to display a list of the players for each team 632, 634, together with their photographs where available, the team badge and a list 636 indicating the match officials.

An operator field 638 is provided in each player 632, 634 and official 636 list and a player or official is assigned to an operator by indicating the operator field for that player or official. A window displaying a list of possible operators is then displayed and the user selects the operator to track that player or official. The operators details are then entered in the list adjacent their assigned player or official. This process is repeated until operators have been assigned for all of the players and officials. An events list 640 is also provided an operator to record events is also selected and assigned to the events task in the same way.

The tracking and event operators having been assigned, the tracking program 340 and events program 350 can now be used by the operators on the client tracking and events computers 252, 254 and 256 to derive tracking and events data from the stored video data. The quality control 430 and real time quality control parts of the manager program will be discussed after a discussion of the tracking 340 and events 350 programs.

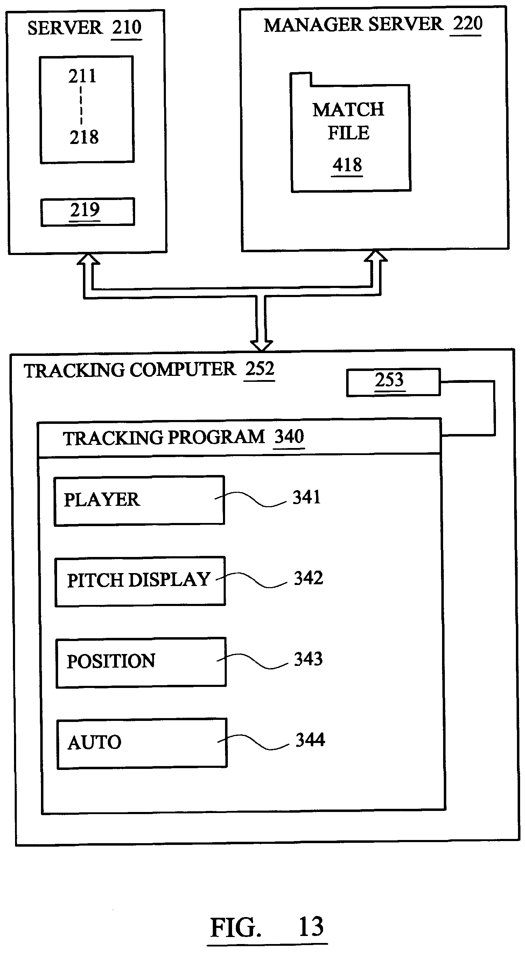

Figure 13 shows a schematic illustration of a part of the network 200 including a tracking computer 252 running the tracking program 340 and in communication with the camera video data 211-218 and TV video data stored on the storage server 210 and the match file 418 held on the manager server over the high speed network connection 240.

The tracking program includes a player routine 341 to play the camera video data to display camera images and separately to play the TV video data to display the TV camera images. The tracking program includes a pitch display routine 342 to display the camera view pitch similar to that 560 described earlier. The tracking program includes a player position data determining routine 343 to determine data representing the position of the player on the 2D model of the pitch 554. The player position data is stored locally in memory 253 and transmitted over the network and stored on the manager computer 220 and on the data back up server 230. An auto-tracking routine 344 is also provided.

The tracking program opens and accesses the match file 418 on the manager server from which all the required synchronization, calibration, auto-tracking configuration, camera focus area and operator data can be derived. Each tracking computer can access all this data form the match file centrally. Camera and TV video data is transmitted a frame at a time when requested from the storage server 210 over the network.

The operator launches the tracking program and identifies them self from operator data displayed on the tracking computer and derived from the operator program 420. As part of the operator program 420, a routine is provided to display a visual indication identifying the player to be tracked by an operator in the first frame of the displayed camera video. So when an operator identifies them self, the player to be tracked is identified by a coloured cross in the first frame of the camera image shown by the player 341. The camera focus area routine 416 has determined the best camera view by which to track that operators player. As the camera image data has already been synchronized, the camera image data corresponding to the first frame of the match is automatically selected and a video displayed by the movie or video player.

The operator starts tracking the player, or official, by using a mouse, or other pointing device, to place a cursor on the player's feet in the displayed camera image and operating a mouse button. The position routine detects the mouse button signal indicating that the player's position has been identified and uses mapping data from the match file, obtained during the calibration routine, to map the location of the cursor on the displayed perspective video image back onto the 2D model of the pitch. This generates a set of cartesian co-ordinates for the first frame indicating the players position on the pitch at the start of the match.

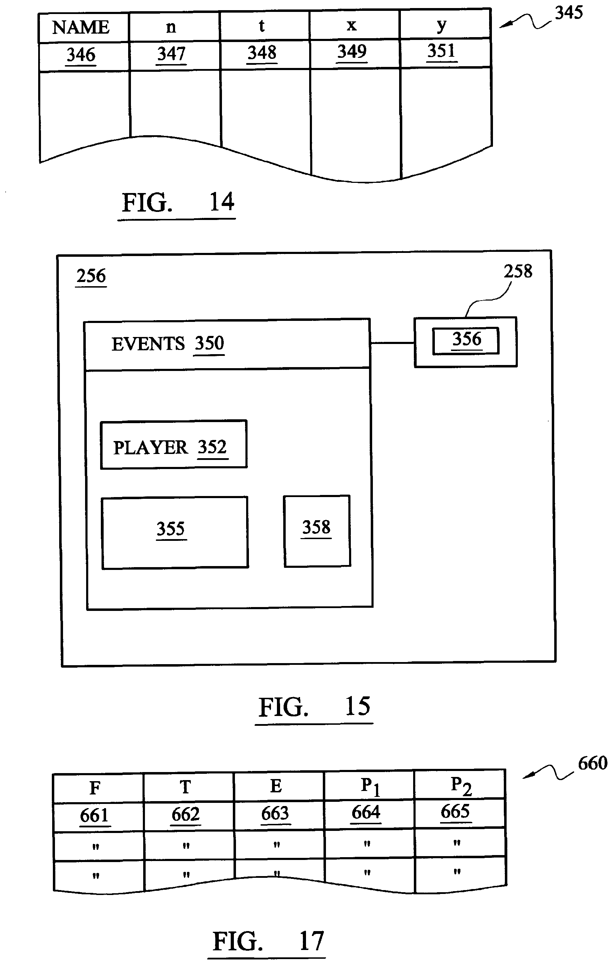

The position data is stored in a data structure 345 as shown in Figure 14. The data structure includes a field for a data item 346 indicating the players name, a field for a data item 347 indicating the corrected frame number, a field indicating the absolute time index (0 for the first frame), and fields 349, 351 for data items indicating the x and y co-ordinates of the player on the 2D pitch model.

When the operator indicates the player position in the image, video dat for the next frame for the camera view being displayed is transferred over the network and displayed by the video player. The operator repositions the the cursor on the player's feet and operates the mouse button and the player position data is determined and stored. This tracking procedure is repeated for each frame of video data. If a player moves into a change over zone in the displayed image, then this is detected and the camera view being displayed can automatically be changed to the best view. A manual over-ride facility is provided so that the operator can continue using a preferred view.

As well as allowing player position data to be derived by manual tracking, an automatic tracking routine 344 can be used. The operator operates a displayed automatic tracking button. The automatic tracking routine compares the position of the pixel box surrounding the player pixels in the current image frame with the position of a pixel box in the next frame to see if the pixel boxes overlap. If they do then the pixel box in the next frame is considered to be for the same player. The players position is then determined by mapping the middle of the bottom line of the pixel box in the image back onto the 2D model.

This process is repeated until there is a conflict such as several pixel boxes overlapping or no pixel boxes overlapping. At this point, manual tracking can be used to overcome auto-tracking conflicts. Auto-tracking is particularly useful for tracking the goalkeeper position which does not change much during and as other players are rarely nearby.

During the synchronization routine the match duration is determined from the TV camera video by identifying the first and last frame and so the camera video is automatically stoped after the last frame is displayed. As the TV and camera images are captured at the same frame rate the same number of frames span the start to the end of a half. That players position data as a function of time for that half has thus been determined and stored. Another operator on a different computer can process that same players position data for the second half while in parallel with the first half data processing.

The match officials' position data is determined in the same way.

As illustrated in Figure 15, an events program 350 is run on an events computer 256 by an operator to allow the timing and nature of match events to be identified and recorded. The events program includes a video player routine 354 and an intelligent events engine 355.

The events engine is based on artificial intelligence routines to provide an intelligent display of candidate events for the events operator. The engine includes a list of all possible match events. The match events are grouped by type eg player events, shot events, set play events, goalkeeper events, referee events and rare events. Each of the main groups of match events are broken down into individual events, eg player events comprises, touch, dribble, header, tackle, cross and clearance. Each individual event has other data items associated with it such that a cross event also needs to have the player that crossed the ball identified. A tackle event also needs to have the tackled player and tackling player identified.

Rules of logic are also applied to the events such that the occurrence of a first event precludes some of the other events from following the first event. For instance, a goal cannot follow the ball going out of play. Also the subsequent events are ranked in terms of how likely they are to follow a particular event, for instance a shot is likely to be followed by a goal keeper and the possible goal keeper events are order in terms of probability.

The video player routine is used to display the TV video. The events program has access to the match file and to the TV video data 219 over the network. A list of a selection of possible events is displayed and the events are colour coded by event groupings. The event operator identifies them self and the first frame of TV video is displayed. The events operator steps through each frame of TV video and every time an event occurs the nature of the event is indicated by using a mouse to position a cursor over the displayed possible events and operating a mouse button and any associated data is entered eg a players name. Data items indicating the nature of that event and associated data items are stored, eg shot (by player) M. The TV video is played a frame at a time until the next event occurs, eg catch (by goalkeeper) N.

As the events engine is intelligent, the most likely events are displayed higher up a possible events list and impossible events are not displayed so as to make entering the events data quicker and more efficient. For frames in which no events are occurring, eg the ball is moving through the air, the events operator merely steps through the TV frames without identifying any event.

Match events are inputted while watching the match movie of the game. When a player touches the ball this is recorded by clicking on the correct event from a displayed list to indicate the event type. Then player names are input in a similar way. This process is continued until an operator has completed their designated section of the game. Match events are split up into 15 minute segments and shared out between different operators. The match event identifying process tags match event to a specific time and a particular player. The resulting match event data file combined with x, y position coordinates derived from the players creates a ball trajectory data set which is used in the output display. The match event data is also used to calculate tactical and statistical data as will be discussed below.

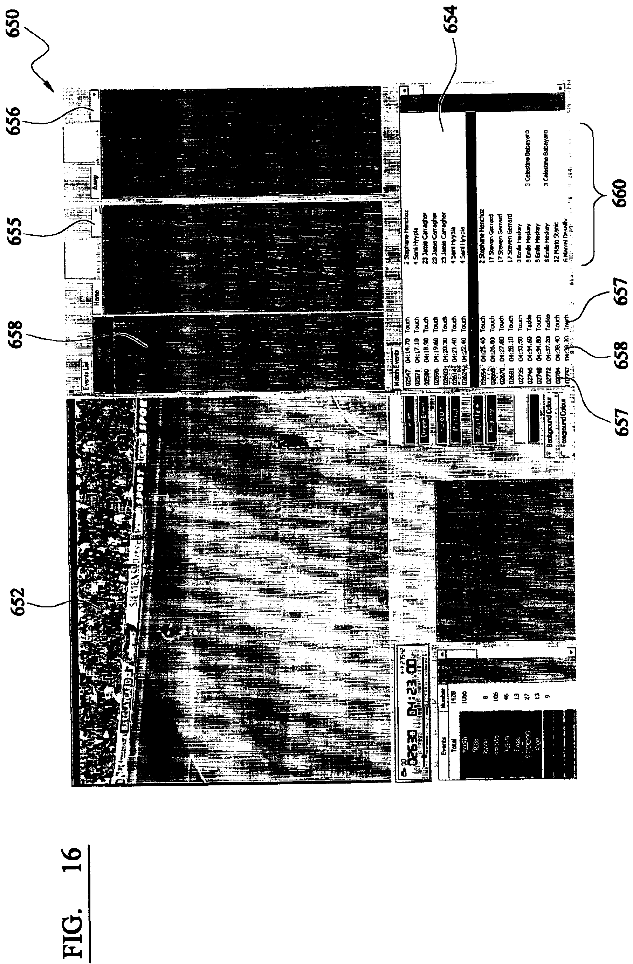

Match Events are inputted via an interface similar to that shown in Figure 16. The match footage movie is displayed in a window and for every touch of the ball the event is recorded. This is done by clicking on a list of events displayed in window. Every time the ball is touched, the type of event is selected from the displayed list. This is immediately followed by selecting the correct player who touched the ball from displayed lists of names in either the home team display or away team. The actual frame number of the event is recorded into a data field and the time of the events is saved as a data item in a further field. An indication of the event is stored in a field, and players names are be recorded in further data fields. The list of 46 events has been defined by football experts.

Figure 17 shows an event data format 660 comprising a table having fields for storing data items representing the actual frame number 661, the actual time of the event 662, the event type 663, the name of the first player involved 664 and the name of the second player involved 665, if required by the event type, eg substitution, foul, tackle. The event data is saved in events file 356.

At the end of the half, an events file has been generated containing data representing the time sequence of all match events for that half. An events file 356 is stored locally in memory device 258 as it is generated, and is also stored as a common file on the manager server and updated constantly over the network in real time as events data is generated by the different events operators. The events data is backed up by the data back up server 230.

The data structure 660 of the events file is similar to data structure 345. The number of TV frames is the same as the number of camera frames as the length of the half was determined from the TV video during the synchronization step.

Instead of manually indicating the nature of the event with a mouse driven cursor, a speech recognition routine 358 can be used to allow the events operator to say the event type and associated data eg "tackle, N", where N is the players name, so as to enter the event data into the event file 356.

While the events file for a half is in progress, a manager can carry out a quality control check of the events data by using an events quality control (QC) module 442. The events file is accessible from the manager computer 220 and the events data is loaded into the events quality control program. The GUI 650 for the events QC program is shown in Figure 16.

The events quality control program includes a video player routine to display the TV camera images 652. The events file data is displayed in a window 654 for editing. A field is provided for displaying lists of player details for each team 655, 656 and a list of events generated and controlled by an intelligent events engine the same as that used in the events program. The events data displayed includes frame number 657, time 658, event type 659 and associated event data 660, eg player name. An operator plays the TV video and watches for events. When an incorrectly identified event is found, editing functions implements by editing buttons 662 are used to correct the event data. The events data can be caused to scroll by the played TV video or the TV video can be caused to play by scrolling through the event data.

The operator highlights an incorrect event type data item 659 in the event data window with a cursor and deletes it and the associated data. The operator then inserts the correct event type data item for the event at that time by identifying it in the displayed events list 658 and identifies the associated player, or players, by highlighting the player from the displayed player lists 655, 656. The associated data item only may need correcting, ie the wrong player may have been identified for the correct event, and that is achieved by deleting the event and player data and re-entering the event and replacing the player as described above. The edited event data should be saved regularly and preferably every time an event data item is corrected. This process is applied to all the event data for each half of the match to provide quality controlled event data files for subsequent use.

The data compilation module 430 is then used to collate the separate player and official position data files (25 in all) and the events file into a single file. The individual player and official position data files for a half are loaded into the compilation module together with the quality control processed events data file for that half.

A single file for that half is produced having a common time index so that the player position data and events data are all synchronized to the same time index running from the time of the TV camera frame for the start of the half to the TV camera frame for the end of the half. A plan view of a representation of the pitch having a sprite representing each player and official located on the pitch at their starting positions is displayed as confirmation that all the player and official position data has been correctly compiled. The compiled half data is then saved for each half.

Once the half data has been compiled, player position and trajectory quality control is carried out using a tracking quality control module 444. The tracking QC module includes a player position part and a player trajectory part. The player position part displays the TV camera video, the camera video from different views, the camera pitch view model and tracking data. The quality control operator, plays the TV video and the camera videos from different views. The position data is mapped onto the camera video images to provide an indication of the derived position of each player on the pitch. A cross is placed on the camera video image at corresponding to the derived player position data when mapped back onto the camera image. If the player position data is accurate, then a cross will appear in the image at each player's feet. If the position data is wrong then a cross will appear away from a player's feet. The operator can then play the match video to identify from different views any times at which the tracking data is incorrect. Editing facilities are provided so that the tracking QC operator can correct any incorrect tracking by deleting incorrect data and entering corrected data by re-identifying the position of the player in the perspective camera image displayed. Using routines similar to those provided in the tracking program.

The trajectory QC program part displays a plan representation of the pitch and allows the path followed by a selected player over the entire half to be displayed based on the player position data. In this way errors in the position data can be identified as gaps in the path or discontinuities in the path.

As well as providing processed data quality control functions, the manager program provides real time quality control. The real time QC module 450 allows the manager to view the tracking activity being carried out by a tracking operator by displaying in a window on the manager server 220 the tracking actions being carried out on a tracking computer. The module 450 effectively displays on the manager computer, over the network, what is being displayed on a tracking computer so that the manager can actively monitor the quality of tracking data being entered by tracking operators. For instance, if the manager notices that a tracking operator has accidentally changed players during their tracking, the manager can send a message over the network to alert the tracking operator and requesting that the re-enter the tracking data. This real-time tracking quality control helps to speed up the data processing time by reducing the amount of post tracking quality control required.

After position data quality control, a final output file is available for each half including time ordered player position and match event data 360.

A match display program 370 can be used to provide an animation of the match from the match data 360. The match display program requires a file containing the match data files for each half, the TV camera data files for each half, picture data for the players and officials and team sprite data. A video player routine is provided to display the TV camera video. A plan view of a scale representation the pitch is displayed and a sprite, in the form of the respective teams shirts, is displayed on the pitch at the each players position as derived from the player position data, and similarly for the match officials. As the players co-ordinates on the pitch are available as a function of time it is a simple matter to produce a 2D plan animation showing how the players move over the pitch during the match. This can be synchronized with the displayed TV video so that the actual match events can be seen while allowing the positions of all the players on the pitch also to be displayed.

Football coaches have found it particularly advantageous to be able to consider the positions of all players on the pitch when certain match events occur, eg how players were positioned when possession of the ball was lost resulting in the opposition scoring. The TV camera images provide details while the overview of the entire pitch allows improved tactical analysis. The match display program has access to all the player position data and event data and so can also provide statistical analysis of the performance of players or the game: eg the total distance covered by players, the average speed of players, the number of shots in total, the number of shots by a player, the number of tackles. As all the match events, and players associated with those events, and the position of each player as a function of time is available, any information relating to the match can easily be derived from the compiled match file.

The compiled match file can also be provided as a database 380 of player position and event data as a function of time. Data mining routines can the be used to interrogate the data base to derive player performance data or to try and identify patterns in individual matches or by comparing data for different matches.

Data derived from the data base can be supplied to many different parties having an interest in the data. For instance fans could be allowed to access data from the database over the interent. Bookies could use the data base to provide wagers and spread betting services. Coaches, trainers and medical staff could use data from the database to help assess the performance of the players. It will be appreciated that there are many potential users of the data and different types of information that can be derived from the data.

Although the foregoing discussion has focussed on application of the invention in the field of football, it will be appreciated that it is not limited to that sport, but can be applied to any activities in which it data relating to the position of a participant as a function of time would be of use in assessing the performance of the participant alone, as part of a team, or teams as a whole.

## Claims

1. A method for obtaining data relating to the performance of a plurality of participants in a sporting event held on a playing surface (115), comprising the steps of:
determining the position of each participant on the playing surface at different times from an indication of the location of each participant in a calibrated video image (310) of the playing surface captured at different times;
storing position data (360) indicating the position of each participant at different times, **characterised in that** the method further comprises:
indicating the occurrence of a match event by identifying the match event from a video image of the sporting event;
storing match event data (360) time correlated with the position data for all of the plurality of participants, wherein the match event data indicates the nature of the match event, the participant associated with the match event and an indication of the time of the match; and
determining a playing object trajectory data set from the stored match event data and the position data so that the trajectory of the playing object can be determined without tracking the trajectory of the playing object.

2. A method as claimed in claim 1, in which the position of the participant is stored for the duration of the participant's participation in the sporting event.

3. A method as claimed in claim 1, in which the position of all the participants in the sporting event is determined and stored.

4. A method as claimed in claim 1, in which the calibrated video image is calibrated by identifying at least three points of the playing surface shown in the video image (552) with the same points on a playing surface of the same size as the actual playing surface.

5. A method as claimed in claim 4, in which the points are playing surface markings.

6. A method as claimed in claim 1, in which video images from a plurality of different views of the playing surface are used.

7. A method as claimed in claim 6, in which the whole of the playing surface is covered by the different views of the playing surface.

8. A method as claimed in claim 1, in which the calibrated video image is synchronised with reference to an event shown in a reference image.

9. A method as claimed in claim 1, and including the step of deriving participant performance data from the position and time data for that participant.

10. A method as claimed in claim 1, and including the step of deriving participant performance data from the match event data for that participant.

11. A method as claimed in claim 6, and including the step of determining the position of the participant on the playing surface from a calibrated video image showing a different view of the playing surface when the participant is located in an area of overlap of different views of the playing surface.

12. A method for assessing the performance of participants in a sporting event, comprising the steps of:
capturing video images with image capturing devices at a sporting event from different views of the playing surface and covering the whole of the playing surface;
transmitting digital video data from the location of the sporting event to a data processing centre remote from the sporting event;
storing the digitised video data on a data processing system; and
obtaining data relating to the performance of a plurality of participants in the sporting event using the method of any preceding claim.

13. A data processing system (200) for obtaining data relating to the performance of a plurality of participants in a sporting event held on a playing surface, the system comprising:
a storage device (210) storing digital video data relating to different views of the playing surface;
a display (310) which displays calibrated video images of the playing surface;
a means for indicating the location of a one of the participants in the displayed video image; and
data processing means (320, 340, 252) programmed to determine position data indicating the position of the one of the participants on the playing surface from the identified location and store the position data of the one of the participants at different times, and **characterised by** further comprising data processing means (320, 350, 256) programmed to indicate the occurrence of a match event when the match event is identified in the displayed video image and to determine the time of the match event, and further programmed to store match event data time correlated with the position data for all of the plurality of participants, wherein the match event data indicates the nature of the match event, a one of the plurality of participants associated with the match event and an indication of the time of the match event, and wherein the data processing means is further programmed to determine a playing object trajectory data set from the stored match event data and the position data so that the trajectory of the playing object can be determined without tracking the trajectory of the playing object.

14. The data processing system as claimed in claim 13, further comprising:
a server (210) including the storage device;
a tracking computer (252) including the display, the means for indicating and the data processing means;
a network (242) for transmitting frames of digital video data from the server to the tracking computer; and
a storage device (220, 230, 380) connected to the network for storing data relating to the position of a participant in the sporting event derived by the tracking computer.

15. The data processing system as claimed in claim 14, in which there are a plurality of tracking computers (252) connected to the network with a tracking computer for each participant in the sporting event.

16. The data processing system as claimed in claim 14, and including an events computer (256) which transmits data relating to the nature and timing of a match event in the sporting event over the network to the storage device (220, 230, 380) for storage.

17. A computer program product comprising a computer readable medium bearing computer program code executable on a data processing device to provide a method as claimed in any of claims 1 to 12.

## Patentansprüche

1. Verfahren zum Gewinnen von Daten, welche sich auf die Leistung von mehreren Teilnehmern bei einem Sportereignis beziehen, welches auf einer Spielfläche (115) abgehalten wird, umfassend die Schritte:
Bestimmen der Position von jedem Teilnehmer auf der Spielfläche zu unterschiedlichen Zeiten aus einer Anzeige des Ortes von jedem Teilnehmer in einem kalibrierten Videobild (310) der Spielfläche, welche zu unterschiedlichen Zeiten erfasst wird;
Speichern von Positionsdaten (360), welche die Position von jedem Teilnehmer zu unterschiedlichen Zeiten anzeigen, **dadurch gekennzeichnet, dass** das Verfahren ferner umfasst:
Anzeigen des Auftretens eines Spielereignisses durch Identifizieren des Spielereignisses aus dem Videobild des Sportereignisses;
Speichern von Spielereignisdaten (360) zeitlich korreliert mit den Positionsdaten für alle der mehreren Teilnehmer, wobei die Spielereignisdaten die Art des Spielereignisses, den dem Spielereignis zugeordneten Teilnehmer und eine Anzeige der Zeit des Spiels anzeigen; und
Bestimmen eines Spielobjekt-Trajektoriedatensatzes aus den gespeicherten Spielereignisdaten und den Positionsdaten derart, dass die Trajektorie des Spielobjekts bestimmt werden kann, ohne die Trajektorie des Spielobjekts zu verfolgen.

2. Verfahren nach Anspruch 1, wobei die Position des Teilnehmers für die Dauer der Teilnahme des Teilnehmers bei dem Sportereignis gespeichert wird.

3. Verfahren nach Anspruch 1, wobei die Position von allen Teilnehmern an dem Sportereignis bestimmt und gespeichert wird.

4. Verfahren nach Anspruch 1, wobei das kalibrierte Videobild durch Kennzeichnen von mindestens drei Punkten der Spielfläche, welche in dem Videobild (552) gezeigt wird, mit den gleichen Punkten auf einer Spielfläche von der gleichen Größe wie die tatsächliche Spielfläche kalibriert wird.

5. Verfahren nach Anspruch 4, wobei die Punkte Spielflächenmarkierungen sind.

6. Verfahren nach Anspruch 1, wobei Videobilder von mehreren unterschiedlichen Ansichten der Spielfläche verwendet werden.

7. Verfahren nach Anspruch 6, wobei die Gesamtheit der Spielfläche durch die unterschiedlichen Ansichten der Spielfläche abgedeckt wird.

8. Verfahren nach Anspruch 1, wobei das kalibrierte Videobild bezogen auf ein in einem Referenzbild gezeigtes Ereignis synchronisiert wird.

9. Verfahren nach Anspruch 1 und aufweisend den Schritt eines Ableitens von Teilnehmerleistungsdaten aus den Positions- und Zeitdaten für den Teilnehmer.

10. Verfahren nach Anspruch 1 und aufweisend den Schritt eines Ableitens von Teilnehmerleistungsdaten aus den Spielereignisdaten für den Teilnehmer.

11. Verfahren nach Anspruch 6 und aufweisend den Schritt eines Bestimmens der Position des Teilnehmers auf der Spielfläche aus einem kalibrierten Videobild, welches eine andere Ansicht der Spielfläche zeigt, wenn der Teilnehmer in einem Überlappungsbereichs von unterschiedlichen Ansichten der Spielfläche angeordnet ist.

12. Verfahren zum Bewerten der Leistung von Teilnehmern bei einem Sportereignis, umfassend die Schritte:
Erfassen von Videobildern mit Bilderfassungsvorrichtungen bei einem Sportereignis aus unterschiedlichen Ansichten der Spielfläche und Abdecken der Gesamtheit der Spielfläche;
Übertragen von digitalen Videodaten von dem Ort des Sportereignisses zu einem Datenverarbeitungszentrum entfernt von dem Sportereignis;
Speichern der digitalisierten Videodaten auf einem Datenverarbeitungssystem; und
Gewinnen von Daten, welche sich auf die Leistung von mehreren Teilnehmern bei dem Sportereignis beziehen, unter Verwendung des Verfahrens nach einem der vorhergehenden Ansprüche.

13. Datenverarbeitungssystem (200) zum Gewinnen von Daten, welche sich auf die Leistung von mehreren Teilnehmern bei einem Sportereignis beziehen, welches auf einer Spielfläche abgehalten wird, wobei das System umfasst:
eine Speichervorrichtung (210), welche digitale Videodaten speichert, welche sich auf unterschiedliche Ansichten der Spielfläche beziehen;
eine Anzeige (310), welche kalibrierte Videobilder der Spielfläche anzeigt;
ein Mittel zum Anzeigen des Ortes von einem der Teilnehmer in dem angezeigten Videobild; und
Datenverarbeitungsmittel (320, 340, 252), welche programmiert sind, um Positionsdaten, welche die Position von dem einen der Teilnehmer auf der Spielfläche anzeigen, aus dem identifizierten Ort zu bestimmen und die Positionsdaten von dem einen der Teilnehmer zu unterschiedlichen Zeiten zu speichern, und **gekennzeichnet durch** ferner umfassend Datenverarbeitungsmittel (320, 350, 256), welche programmiert sind, das Auftreten eines Spielereignisses anzuzeigen, wenn das Spielereignis in dem angezeigten Videobild identifiziert wird, und die Zeit von dem Spielereignis zu bestimmen, und ferner programmiert sind, Spielereignisdaten zeitlich korreliert mit den Positionsdaten für alle der mehreren Teilnehmer zu speichern, wobei die Spielereignisdaten die Art des Spielereignisses, einen der mehreren Teilnehmer, welcher dem Spielereignis zugeordnet ist, und eine Anzeige der Zeit des Spielereignisses anzeigen, und wobei die Datenverarbeitungsmittel ferner programmiert sind, einen Spielobjekt-Trajektoriedatensatz aus den gespeicherten Spielereignisdaten und den Positionsdaten derart zu bestimmen, dass die Trajektorie des Spielobjekts bestimmt werden kann, ohne die Trajektorie des Spielobjekts zu verfolgen.

14. Datenverarbeitungssystem, wie es in Anspruch 13 beansprucht wird, ferner umfassend:
einen Server (210), welcher eine Speichervorrichtung aufweist;
einen Verfolgungscomputer (252), welcher die Anzeige, die Mittel zum Anzeigen und die Datenverarbeitungsmittel aufweist;
ein Netz (242) zum Übertragen von Rahmen von digitalen Videodaten von dem Server zu dem Verfolgungscomputer; und
eine Speichervorrichtung (220, 230, 380), welche mit dem Netz zum Speichern von Daten verbunden ist, welche sich auf die Position eines Teilnehmers bei dem Sportereignis beziehen, welche von dem Verfolgungscomputer abgeleitet wird.

15. Datenverarbeitungssystem, wie es in Anspruch 14 beansprucht wird, wobei mehrere Verfolgungscomputer (252) mit dem Netz verbunden sind, wobei ein Verfolgungscomputer für jeden Teilnehmer bei dem Sportereignis vorgesehen ist.

16. Datenverarbeitungssystem, wie es in Anspruch 14 beansprucht wird, und aufweisend einen Ereignisse-Computer (256), welcher Daten, welche sich auf die Art und ein Zeitverhalten eines Spielereignisses bei dem Sportereignis beziehen, über das Netz zu der Speichervorrichtung (220, 230, 380) zum Speichern überträgt.

17. Computerprogrammprodukt, umfassend ein computerlesbares Medium, welches Computerprogrammcode trägt, welcher auf einer Datenverarbeitungsvorrichtung ausführbar ist, um ein Verfahren bereitzustellen, wie es in einem der Ansprüche 1 bis 12 beansprucht wird.

## Revendications

1. Procédé pour obtenir des données relatives à la performance d'une pluralité de participants à un événement sportif tenu sur une surface de jeu (115), comprenant les étapes consistant :
à déterminer la position de chaque participant sur la surface de jeu à des moments différents à partir d'une indication de l'emplacement de chaque participant dans une image vidéo calibrée (310) de la surface de jeu capturée à des moments différents ;
à stocker des données de position (360) indiquant la position de chaque participant à des moments différents, **caractérisé en ce que** le procédé comprend en outre le fait :
d'indiquer l'occurrence d'un événement de match en identifiant l'événement de match à partir d'une image vidéo de l'événement sportif ;
de stocker des données d'événement de match (360) corrélées dans le temps avec les données de position pour l'ensemble de la pluralité de participants, où les données d'événement de match indiquent la nature de l'événement de match, le participant associé à l'événement de match et une indication de l'heure du match ; et
de déterminer un ensemble de données de trajectoire d'objet de jeu à partir des données d'événement de match stockées et des données de position de sorte que la trajectoire de l'objet de jeu puisse être déterminée sans suivre la trajectoire de l'objet de jeu.

2. Procédé tel que revendiqué dans la revendication 1, dans lequel la position du participant est stockée pendant la durée de la participation du participant à l'événement sportif.

3. Procédé tel que revendiqué dans la revendication 1, dans lequel la position de tous les participants à l'événement sportif est déterminée et stockée.

4. Procédé tel que revendiqué dans la revendication 1, dans lequel l'image vidéo calibrée est calibrée en identifiant au moins trois points de la surface de jeu représentée dans l'image vidéo (552) avec les mêmes points sur une surface de jeu de la même taille que la surface de jeu réelle.

5. Procédé tel que revendiqué dans la revendication 4, dans lequel les points sont des marques de surface de jeu.

6. Procédé tel que revendiqué dans la revendication 1, dans lequel des images vidéo provenant d'une pluralité de vues différentes de la surface de jeu sont utilisées.

7. Procédé tel que revendiqué dans la revendication 6, dans lequel la totalité de la surface de jeu est couverte par les différentes vues de la surface de jeu.

8. Procédé tel que revendiqué dans la revendication 1, dans lequel l'image vidéo calibrée est synchronisée en référence à un événement représenté dans une image de référence.

9. Procédé tel que revendiqué dans la revendication 1, et comportant l'étape consistant à dériver des données de performance de participant des données de position et de temps pour ce participant.

10. Procédé tel que revendiqué dans la revendication 1, et comportant l'étape consistant à dériver des données de performance de participant des données d'événement de match pour ce participant.

11. Procédé tel que revendiqué dans la revendication 6, et comportant l'étape consistant à déterminer la position du participant sur la surface de jeu à partir d'une image vidéo calibrée représentant une vue différente de la surface de jeu lorsque le participant est situé dans une zone de chevauchement de différentes vues de la surface de jeu.

12. Procédé d'évaluation de la performance de participants à un événement sportif, comprenant les étapes consistant :
à capturer des images vidéo avec des dispositifs de capture d'image à un événement sportif à partir de différentes vues de la surface de jeu et à couvrir la totalité de la surface de jeu ;
à transmettre des données vidéo numériques à partir de l'emplacement de l'événement sportif à un centre de traitement de données distant de l'événement sportif ;
à stocker les données vidéo numérisées sur un système de traitement de données ; et
à obtenir des données relatives à la performance d'une pluralité de participants à l'événement sportif en utilisant le procédé de l'une des revendications précédentes.

13. Système de traitement de données (200) pour obtenir des données relatives à la performance d'une pluralité de participants à un événement sportif tenu sur une surface de jeu, le système comprenant :
un dispositif de stockage (210) stockant des données vidéo numériques relatives à différentes vues de la surface de jeu ;
un dispositif d'affichage (310) qui affiche des images vidéo calibrées de la surface de jeu ;
un moyen pour indiquer l'emplacement d'un des participants dans l'image vidéo affichée ; et
un moyen de traitement de données (320, 340, 252) programmé pour déterminer des données de position indiquant la position de l'un des participants sur la surface de jeu à partir de l'emplacement identifié et pour stocker les données de position de l'un des participants à des moments différents, et **caractérisé en ce qu'**il comprend en outre un moyen de traitement de données (320, 350, 256) programmé pour indiquer l'occurrence d'un événement de match lorsque l'événement de match est identifié dans l'image vidéo affichée et pour déterminer l'heure de l'événement de match, et programmé en outre pour stocker des données d'événement de match corrélées dans le temps avec les données de position pour l'ensemble de la pluralité de participants, où les données d'événement de match indiquent la nature de l'événement de match, l'un de la pluralité de participants associé à l'événement de match et une indication de l'heure de l'événement de match, et où le moyen de traitement de données est en outre programmé pour déterminer un ensemble de données de trajectoire d'objet de jeu à partir des données d'événement de match stockées et des données de position de sorte que la trajectoire de l'objet de jeu puisse être déterminée sans suivre la trajectoire de l'objet de jeu.

14. Système de traitement de données tel que revendiqué dans la revendication 13, comprenant en outre :
un serveur (210) comportant le dispositif de stockage ;
un ordinateur de suivi (252) comportant le dispositif d'affichage, le moyen d'indication et le moyen de traitement de données ;
un réseau (242) pour transmettre des trames de données vidéo numériques du serveur à l'ordinateur de suivi ; et
un dispositif de stockage (220, 230, 380) connecté au réseau pour stocker des données relatives à la position d'un participant à l'événement sportif dérivées par l'ordinateur de suivi.

15. Système de traitement de données tel que revendiqué dans la revendication 14, dans lequel il y a une pluralité d'ordinateurs de suivi (252) connectés au réseau avec un ordinateur de suivi pour chaque participant à l'événement sportif.

16. Système de traitement de données tel que revendiqué dans la revendication 14, et comportant un ordinateur d'événements (256) qui transmet des données relatives à la nature et à l'heure d'un événement de match dans l'événement sportif sur le réseau au dispositif de stockage (220, 230, 380) pour le stockage.

17. Produit de programme informatique comprenant un support lisible par ordinateur portant un code de programme informatique exécutable sur un dispositif de traitement de données pour fournir un procédé tel que revendiqué dans l'une des revendications 1 à 12.
